Europäisches Patentamt

European Patent Office

Office européen des brevets

(19)

(11) Veröffentlichungsnummer: **0 166 883**
**B1**

(12) # EUROPÄISCHE PATENTSCHRIFT

(45) Veröffentlichungstag der Patentschrift:
31.01.90

(21) Anmeldenummer: 85104743.1

(22) Anmeldetag: 19.04.85

(51) Int. Cl.⁴: **A 61 C 5/12**, A 61 C 15/04,
B 65 H 35/04

(54) Vorrichtung zur Abgabe von Matrizenbändern, Behandlungsfäden, Folien oder dgl.

(30) Priorität: 05.06.84 DE 3420873

(43) Veröffentlichungstag der Anmeldung:
08.01.86 Patentblatt 86/2

(45) Bekanntmachung des Hinweises auf die Patenterteilung:
31.01.90 Patentblatt 90/5

(84) Benannte Vertragsstaaten:
AT CH DE FR GB IT LI NL SE

(56) Entgegenhaltungen:
FR-A- 2 304 253
US-A- 2 334 757
US-A- 2 522 047
US-A- 3 117 478
US-A- 3 462 058
US-A- 3 470 781
US-A- 3 746 017
US-A- 3 833 009

(73) Patentinhaber: Franz Sachs & Co KG, Oberhofer Strasse 18, D-7992 Tettnang (DE)

(72) Erfinder: Stusack, Hans, Salzweg 6, D-7992 Tettnang (DE)
Erfinder: Schulz, Peter, Oberhofer Strasse 18, D-7992 Tettnang (DE)

(74) Vertreter: Engelhardt, Guido, Dipl.-Ing., Patentanwalt Montafonstrasse 35 Postfach 1350, D-7990 Friedrichshafen 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zur Abgabe von Matrizenbändern, Behandlungsfäden, Folien oder dgl. in wählbaren Abschnitten von einer in einem Gehäuse verdrehbar gehaltenen Vorratsrolle, wobei das Matrizenband in dem Gehäuse geführt und mittels einer von Hand verdrehbaren Antriebsrolle verschiebbar und in dem Gehäuse ein von Hand betätigbares in Richtung des Matrizenbandes verstellbares Schneidmesser angeordnet ist, mittels dem das Matrizenband in einem Randbereich des Gehäuses durchtrennbar ist.

Ein Spender dieser Art ist durch die US-A 3 470 781 bekannt. Das Schneidmesser ist bei dieser Vorrichtung zusammen mit der Antriebsrolle entgegen der Kraft einer Blattfeder verschwenkbar gelagert und wirkt mit einem keilförmig ausgebildeten ortsfesten Gegenmesser zusammen. Da somit eine ausreichende Führung des Messers und auch des aufgewickelten Bandes nicht gegeben sind, ist mittels dieser Vorrichtung eine dünne Kunststoff-Folie nicht zuverlässig und vor allem glatt zu durchtrennen.

Zwar ist es durch die FR-A 2 304 253 des weiteren bekannt, bei einer Schneidvorrichtung das Schneidmesser durch eine in einem parallel zu dem äußeren Ende des Gehäuses verlaufenden Schlitz verschiebbar geführten Schneidklinge mit Schneidkante zu bilden, bei einem Schneidvorgang ist hierbei aber das Gehäuse entgegen der Kraft einer Zugfeder zu verdrehen, um einen Schneidvorgang auszuführen. Die Schneidklinge des Schneidmessers greift dabei in einen Schlitz eines ortsfesten Gegenmessers ein. Zum Durchtrennen dünner Kunststoff-Folie ist diese Schneidvorrichtung ebenfalls nicht verwendbar.

Die durch die US-A 3 117 478 bekannte Vorrichtung zum Schneiden von Papierstücken weist ferner ein der Antriebsrolle zugeordnetes Klinkengesperre auf. Auch diese mit einem schwenkbar gelagerten Schneidmesser versehene Vorrichtung ist nicht in der Weise ausgebildet, daß dünne reißfeste Kunststoffbänder glatt durchtrennt werden können.

Aufgabe der Erfindung ist es demnach, die Vorrichtung der eingangs genannten Gattung in der Weise zu verbesern, daß Abschnitte wählbarer Länge ohne weiteres von einem dünnen Matrizenband abgetrennt werden können. Vor allem soll es hierbei ermöglicht werden, mit nur einer Hand die Länge des jeweiligen Bandabschnittes einzustellen und das Matrizenband problemlos zu durchtrennen, so daß auch unter schwierigen Arbeitsbedingungen eine einfache Handhabung gegeben ist. Außerdem soll der Bauaufwand gering gehalten werden, dennoch soll aber eine stets sichere Funktionsweise gegeben sein.

Gemäß der Erfindung wird dies dadurch erreicht, daß das Schneidmesser durch eine in einem vorzugsweise parallel zu dem äußeren Rand des Gehäuses verlaufenden Schlitz verschiebbar geführten Schneidklinge mit in Achsrichtung geneigter Schneidkante gebildet und mit einem Druckstück versehen ist, daß das Druckstück in einer Ausnehmung des Gehäuses auf der der Antriebsrolle gegenüberliegenden Seite angeordnet und entgegen der Kraft einer Druckfeder verschiebbar ist, daß der Antriebsrolle ein Gegenlager in Form einer in dem Gehäuse verdrehbar gehaltenen Anlagerolle zugeordnet ist und daß die Antriebsrolle mit einem Klinkengesperre versehen ist.

Zweckmäßig ist es hierbei, die Antriebsrolle und/oder die Anlagerolle in kreissegmentförmig gestalteten Ausnehmungen des Gehäuses verdrehbar zu halten und mit einem einen hohen Reibwert aufweisenden Belag und/oder mit einem oder mehreren beispielsweise in umlaufenden Rillen gehaltenen Gummiringen oder dgl. zu versehen.

Angebracht ist es ferner, das Matrizenband in einen vorzugsweise zur Längsachse des Gehäuses geneigt verlaufenden, durch mit Abstand zueinander angeordneten Zwischenwänden gebildeten Schlitz verschiebbar zu führen.

Die gemäß der Erfindung ausgebildete Vorrichtung zur Abgabe von Matrizenbändern, Behandlungsfäden, Folien oder dgl. ist nicht nur einfach in der konstruktiven Ausgestaltung und somit wirtschaftlich ohne Schwierigkeiten herstellbar, sondern auch sehr einfach in der Handhabung und ermöglicht es vor allem, von einem Matrizenband mit nur einer Hand einen Abschnitt leicht wählbarer Länge problemlos abzutrennen. Mit dem Daumen einer Hand, in der das Gehäuse gehalten wird, ist es möglich, durch Verdrehen der Antriebsrolle das Matrizenband aus diesem herauszuschieben und mit dem Zeigefinger der gleichen Hand das Schneidmesser zu betätigen. Das Matrizenband kann somit leicht an einer beliebigen Stelle durchtrennt werden, Schwierigkeiten irgendwelcher Art treten dabei nicht auf. Vielmehr ist stets eine einfache und betriebssichere Handhabung gewährleistet, so daß auch eine vielseitige Verwendbarkeit, insbesondere in der Zahnmedizin, gegeben ist.

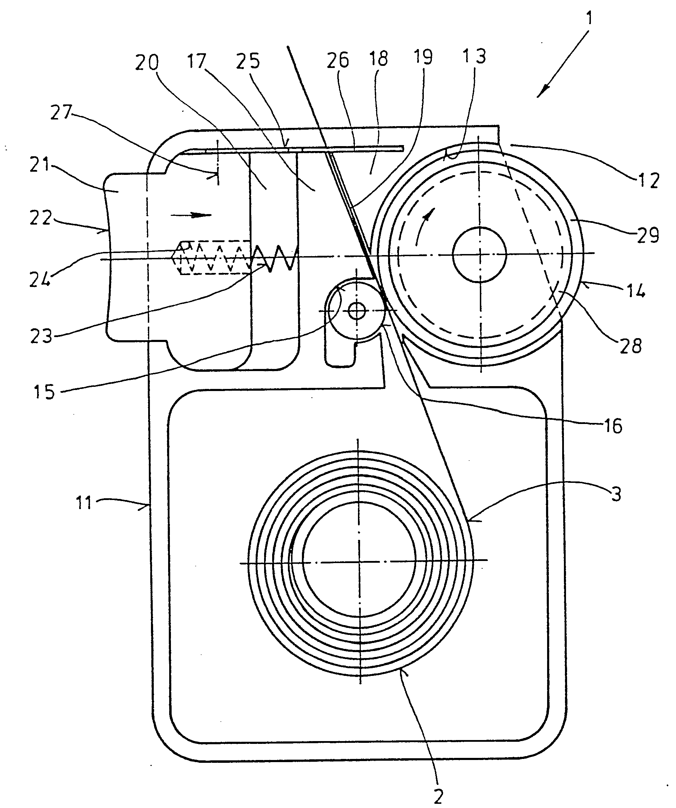

In der Zeichnung ist ein Ausführungsbeispiel der gemäß der Erfindung ausgebildeten Vorrichtung zur Abgabe von Matrizenbändern, Behandlungsfäden, Folien od.dgl. dargestellt, das nachfolgend im einzelnen erläutert ist.

Die mit 1 bezeichnete Vorrichtung zur Abgabe eines Abschnittes wählbarer Länge von einem auf einer Vorratsrolle 2 abspulbaren Matrizenband 3 besteht im wesentlichen aus einer in einem Gehäuse 11 verdrehbar gehaltenen Antriebsrolle 14, die auf das Matrizenband 3 einwirkt, und einem Schneidmesser 25, mittels dem dieses in einem Randbereich des Gehäuses 11 zu durchtrennen ist. Die Antriebsrolle 11 wie auch das Schneidmesser 25 sind hierbei mit den Fingern einer Hand, in der das Gehäuse 11 gehalten wird, betätigbar.

Das Matrizenband 3 ist in einem in dem Gehäuse 11 vorgesehenen Schlitz 19, der durch zwei mit Abstand zueinander angeordnete Zwischenwände 17 und 18 gebildet ist, verschiebbar geführt und kann durch Verdrehen der Antriebsrolle 14 in Pfeil-

richtung vorgeschoben werden. Als Gegenlager der Antriebsrolle 14 dient eine Gegenrolle 16, so daß ein stets sicherer Vorschub gewährleistet ist. Die Antriebswelle 14 wie auch die Gegenrolle 16 sind jeweils in kreissegmentförmigen Ausnehmungen 13 bzw. 15 des vorzugsweise zweiteilig ausgebildeten, aus Kunststoff bestehenden Gehäuses 11 eingesetzt und in diesen verdrehbar gehalten, weitere Führungsglieder sind demnach nicht erforderlich. Und da das Gehäuse 11 in einem Eckbereich mit einer Freisparung 12 versehen ist, kann die Antriebswelle 14 leicht betätigt werden.

Das auf das Matrizenband 3 einwirkende Schneidmesser 25 ist aus einer in einem parallel zu dem oberen Rand des Gehäuses 11 verlaufenden Schlitz 26 verschiebbar geführten Schneidklinge gebildet, die eine in Achsrichtung geneigte Schneidkante aufweist und mittels einer Niete oder einem Stift, wie dies durch die strichpunktiert eingezeichnete Linie 27 angedeutet ist, an einem Druckstück 25 befestigt ist. Das mit einer Betätigungsfläche 22 ausgestattete Druckstück 21 ist bei dem gezeigten Ausführungsbeispiel auf der der Antriebsrolle 14 gegenüberliegenden Seite des Gehäuses 11 vorgesehenen weiteren Ausnehmung 20 verschiebbar eingesetzt, und zwar entgegen der Kraft einer in einer Bohrung 24 geführten Druckfeder 23. Eine selbsttätige Rückführung des Druckstückes 21 ist somit sichergestellt.

Um einen Abschnitt bestimmter Länge von dem Matrizenband 2 abzutrennen, ist somit lediglich die Antriebsrolle 14 so lange zu verdrehen, bis dieses in der gewünschten Länge über das Gehäuse 11 übersteht. Sodann ist das Druckstück 21 in Richtung des Matrizenbandes 3 zu verschieben, so daß durch das Schneidmesser 25 dieses durchtrennt wird. Der abgetrennte Abschnitt kann daraufhin abgenommen werden. Da die Antriebsrolle 14 mit mehreren nebeneinander angeordneten, in umlaufenden Rillen 28 gehaltenen Gummiringen 29 versehen ist, wird dabei das Matrizenband 3, wobei über die Antriebsrolle 14 dieses durch geringe Krafteinwirkung zusätzlich fixiert werden kann, in einem ausreichenden Maße gehalten, ein einwandfreies Durchtrennen ist demnach gewährleistet.

## Patentansprüche

1. Vorrichtung (1) zur Abgabe von Matrizenbändern (3), Behandlungsfäden, Folien oder dgl. in wählbaren Abschnitten von einer in einem Gehäuse (11) verdrehbar gehaltenen Vorratsrolle (2), wobei das Matrizenband (3) in dem Gehäuse (11) geführt und mittels einer von Hand verdrehbaren Antriebsrolle (14) verschiebbar und in dem Gehäuse (11) ein von Hand betätigbares in Richtung des Matrizenbandes (3) verstellbares Schneidmesser (25) angeordnet ist, mittels dem das Matrizenband (3) in einem Randbereich des Gehäuses (11) durchtrennbar ist, dadurch gekennzeichnet, daß das Schneidmesser (25) durch eine in einem vorzugsweise parallel zu dem äußeren Rand des Gehäuses (11) verlaufenden Schlitz (26) verschiebbar geführten Schneidklinge mit in Achsrichtung geneigter Schneidkante gebildet und mit einem Druckstück (21) versehen ist,

daß das Druckstück (21) in einer Ausnehmung (20) des Gehäuses (11) auf der der Antriebsrolle (14) gegenüberliegenden Seite angeordnet und entgegen der Kraft einer Druckfeder (23) verschiebbar ist,

daß der Antriebsrolle (14) ein Gegenlager in Form einer in dem Gehäuse (11) verdrehbar gehaltenen Anlagerolle (16) zugeordnet ist und

daß die Antriebsrolle (14) mit einem Klinkengesperre versehen ist.

2. Vorrichtung nach Anspruch 1, dadurch gekennzeichnet, daß die Antriebsrolle (14) und/oder die Anlagerolle (16) in kreissegmentförmig gestalteten Ausnehmungen (13, 15) des Gehäuses (11) verdrehbar gehalten sind.

3. Vorrichtung nach Anspruch 1 oder 2, dadurch gekennzeichnet, daß die Antriebsrolle (14) und/ oder die Anlagerolle (16) mit einem einen hohen Reibwert aufweisenden Belag und/oder mit einem oder mehreren beispielsweise in umlaufenden Rillen (28) gehaltenen Gummiringen (29) oder dgl. versehen sind.

4. Vorrichtung nach einem oder mehreren der Ansprüche 1 bis 3, dadurch gekennzeichnet, daß das Matrizenband (3) in einem vorzugsweise zur Längsachse des Gehäuses (11) geneigt verlaufenden, durch mit Abstand zueinander angeordneten Zwischenwänden (17, 18) gebildeten Schlitz (19) verschiebbar geführt ist.

## Claims

1. A device (1) for dispensing matrix bands (3), dental floss, foils or the like in selectable lengths from a supply roll (2) rotatably received in a housing (11), said matrix band (3) being guided in said housing (11) and movable by means of a manually rotatable feed roller (14) and there being a manually actuable cutter (25) arranged within the housing and movable towards the matrix band (3), by which means the matrix band (3) may be cut through within a peripheral portion of the housing, characterised in that

the cutter (25) is provided with a cutting blade movably guided in a slot (26) preferably extending parallel to the outer periphery of the housing (11), said blade being formed with a cutting edge inclined towards its axis, and that said cutter (25) is provided with a pressure element (21),

that the pressure element (21) is arranged in a recess (20) in the housing (11) on the side opposite to the feed roller (14) and is movable against the force of a compression spring (23),

that the feed roller (14) is associated with an opposing support in the form of a support roller (16) rotatably received in the housing (11), and

that the feed roller (14) is provided with a ratchet detent.

2. A device according to Claim 1, characterised in that the feed roller (14) and/or the support roller (16) are rotatably received in recesses (13, 15) in the housing (11) which are made in the form of segments of circles.

3. A device according to Claim 1 or Claim 2, characterised in that the feed roller (14) and/or the support roller (16) are provided with a high-friction coating and/or with one or more rubber rings (29) or the like, received e.g. in annular grooves (28).

4. A device according to one or more of Claims 1 to 3, characterised in that the matrix band (3) is movably guided in a slot (19) preferably extending inclined towards the longitudinal axis of the housing (11) and formed by internal partitions (17, 18) arranged with a gap between them.

**Revendications**

1. Dispositif (1) de distribution de bandes de matrice (3), de fils dentaires, de matériaux en feuilles et analogues, en sections d'une longueur prédéterminée, à partir d'un rouleau de réserve mobile (2) dans un support (11), la bande de matrice (3) étant guidée dans le support (11) et se laissent déplacer à l'aide d'un rouleau d'entraînement (14) tourné manuellement, le support (11) renfermant un couteau (25) actionné manuellement et réglable en direction de la bande de matrice (3) permettant de découper la bande de matrice (3) dans une zone marginale du support (11), se caractérisant par le fait

que le couteau (25) est formé par une lame se laissant déplacer dans une fente (26) orientée de préférence en direction parallèle au bord extérieur du support (11), avec coupe inclinée en direction axiale, et équipé d'une pièce de pression (21),

que la pièce de pression (21) est disposée dans un évidement (20) du support (11) sur la face opposée au rouleau d'entraînement (14) et qu'elle se laisse déplacer contre la force d'un ressort de pression (23),

qu'il est attribué au rouleau d'entraînement, un contre-palier sous la forme d'un rouleau d'appui (16) tournant dans le support (11) et

que le rouleau d'entraînement (14) est muni d'un cliquet d'arrêt.

2. Dispositif d'après la revendication 1, se caractérisant par le fait que le rouleau d'entraînement (14) et/ou le rouleau d'appui (16) tournent dans des évidements sous la forme de segments de cercle (13, 15) dans le support (11).

3. Dispositif d'après les revendications 1 ou 2 se caractérisant par le fait que le rouleau d'entraînement (14) et/ou le rouleau d'appui (16) est muni d'un revêtement avec un coefficient de friction élevé et/ou un ou plusieurs anneau(x) en caoutchouc (29) ou semblables guidé(s) p.ex. dans des gorges sur le pourtour.

4. Dispositif d'après une ou plusieurs des revendications 1 à 3 se caractérisant par le fait que la bande de matrice (3) se déplace dans une fente (19) orientée de préférence en inclinaison par rapport à l'axe longitudinal du support (11) et formée par des parois intermédiaires (17, 18) espacées à une certaine distance l'une de l'autre.